# EUROPÄISCHE PATENTSCHRIFT

(11) **EP 2 563 075 B1**
(45) Veröffentlichungstag und Bekanntmachung des Hinweises auf die Patenterteilung: **06.03.2019**
(21) Anmeldenummer: 11178292.6
(22) Anmeldetag: 22.08.2011
(51) Int. Cl.: H04W 52/02

(54) **Verfahren und Vorrichtung zur Lastadaptiven, übergreifenden Steuerung von Betriebszuständen in konvergenten Fest- und Mobilfunknetzen mit dem Ziel einer verbesserten Energieeffizienz**
Method and device for load-adaptive, comprehensive control of operational states in convergent fixed and mobile wireless networks with the aim of improving energy efficiency
Procédé et dispositif de commande adaptée à la charge et changeante d'états de fonctionnement dans des réseaux radio fixes et mobiles convergents dans le but d'une efficience énergétique améliorée

(43) Veröffentlichungstag der Anmeldung: 27.02.2013
(73) Patentinhaber: Deutsche Telekom AG, 53113 Bonn (DE)
(72) Erfinder: Lange, Christoph, 10318 Berlin (DE); Gladisch, Andreas, 13129 Berlin (DE)
(74) Vertreter: 2K Patentanwälte Blasberg Kewitz & Reichel

(56) Entgegenhaltungen:
- EP-A1- 2 166 777
- 3GPP: "3rd Generation Partnership Project; Technical Specification Group Services and System Aspects; Telecommunication management; Energy Saving Management (ESM); Concepts and requirements (Release 10)", 3GPP STANDARD; 3GPP TS 32.551, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Nr. V10.1.0, 30. März 2011 (2011-03-30), Seiten 1-22, XP050476582, [gefunden am 2011-03-30]
- 3GPP: "3rd Generation Partnership Project; Technical Specification Group Radio Access Network; Evolved Universal Terrestrial Radio Access (E-UTRA); Potential solutions for energy saving for E-UTRAN (Release 10)", 3GPP DRAFT; DRAFT_36927-A10, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Nr. V10.0.0, 1. Juni 2011 (2011-06-01), Seiten 1-22, XP002670172, [gefunden am 2011-09-19]
- Lange Christoph, Gladisch Andreas: "Improving the Energy Efficiency of Telecommunication Networks", SPIE Eco-Photonics 2011 , 28. März 2011 (2011-03-28), Seiten 1-8, XP002670173, Gefunden im Internet: URL:http://spiedigitallibrary.org/proceedi ngs/resource/2/psisdg/8065/1/806516_1 [gefunden am 2012-02-23]

## Beschreibung

Die vorliegende Erfindung bezieht sich auf das allgemeine Gebiet der Telekommunikation und nimmt im Speziellen Bezug auf leitungsgebundene Netze (Festnetze) und Mobilfunknetze. Ziel der vorliegenden Erfindung ist es, eine übergreifende Signalisierung und Steuerung zwischen Fest- und Mobilfunknetz mit dem Ziel einer verbesserten Energieeffizienz des Netzbetriebs zu etablieren.

### Gebiet der Erfindung:

Der Energiebedarf und die Energieeffizienz von Telekommunikationsnetzen haben in jüngster Vergangenheit eine zunehmende Aufmerksamkeit erfahren. Es wird mit dem Blick auf das kritische Erfordernis nachhaltiger Ressourcennutzung auch für die Zukunft erwartet, dass ein energieeffizienter Netzbetrieb unabdingbar für erfolgreiche Telekommunikationsnetzbetreiber und -dienstanbieter sein wird.

Leitungsgebundene Telekommunikationsnetze - auch bezeichnet als Festnetze - und Mobilfunknetze werden weitgehend getrennt voneinander betrieben. Jedoch werden die Verbindungen zwischen Elementen des Mobilfunknetzes oftmals über das Festnetz hergestellt, so dass es Elemente in derartigen Netzen gibt, die Informationen sowohl über Verkehrsbedarfe in Fest- als auch Mobilfunknetzen besitzen: Diese Informationen können dann gezielt genutzt werden, um übergreifend zwischen Fest- und Mobilfunknetz Netzelemente in ihrer bereitgestellten Kapazität - und dadurch bedingten Leistungsaufnahme - lastadaptiv so zu steuern, dass die Energieeffizienz maximiert wird. Im Zuge des Trends zu konvergenten Fest- und Mobilfunknetzen wird darüber hinaus erwartet, dass die Verschmelzung von diesen beiden Netztypen (Fest- und Mobilfunknetz) zukünftig noch weitaus stärker wird.

Die vorliegende Erfindung beschreibt ein Verfahren zur übergreifenden Steuerung von lastadaptiver Kapazitäts- und Leistungszuteilung in Fest- und Mobilfunknetzen.

### Stand der Technik:

Stand der Technik ist, dass heutige Telekommunikationsnetze in ihrer Kapazität auf der Grundlage eines erwarteten Verkehrsspitzenwertes zuzüglich einer Kapazitätsreserve geplant und betrieben werden. Aspekte des lastadaptiven Netzbetriebs mit dem Ziel der Steigerung der Energieeffizienz werden derzeit so gut wie nicht genutzt.

Bedingt durch die gestiegene Aufmerksamkeit bezüglich des Energieverbrauchs von Telekommunikationsnetzen in jüngster Vergangenheit haben sich jedoch vielfältige Aktivitäten zur Senkung des Energieverbrauchs und zur Steigerung der Energieeffizienz von Netzelementen und Netzabschnitten entwickelt. Dabei werden Verfahren definiert, die Kapazität in Abhängigkeit von den Verkehrsanforderungen bereitstellen, mit dem Ziel den Energieverbrauch in lastschwachen Zeiten zu verringern. Diese Verfahren sind typischerweise auf den jeweiligen betrachteten Netzabschnitt bezogen und so in ihrer Wirkungsweise beschränkt.

### Beispiele für unterschiedliche Netzabschnitte sind:

Es wurden beispielsweise Leistungsmodi in der DSL-Technik - für Kupfer-basierte Zugangsnetze - spezifiziert, die bitratenadaptiv in unterschiedliche Leistungsmodi schalten [1,2] und so den Energiebedarf, in Abhängigkeit vom Nutzerverhalten, anpassen. Dieser DSL-L2-Modus ist für ADSL2/ADSL2+ standardisiert und wird implementiert, jedoch bisher auf Grund von Schwierigkeiten mit der Dienstgüte und der Leitungsstabilität in Netzen großer Betreiber nicht genutzt.

Ebenso sind für passive optische Netze (PON) Verfahren zur Verbesserung der Energieeffizienz definiert, die sich vorwiegend auf den lastadaptiven Betrieb des Netzabschlusses im optischen Zugangsnetz beziehen, wie ONU (optical network unit) bzw. ONT (optical network termination) [3].

In Mobilfunknetzen gibt es Ansätze, Basisstationen in ihrer Kapazität dem Verkehrsbedarf anzupassen, also z. B. Basisstationen ggf. in ihrer Leistung herunterzufahren, wenn in lastschwachen Zeiten wenig Verkehr verzeichnet wird, oder einzelne Basisstationen in diesen lastschwachen Zeiten abzuschalten und die sonst von diesen nun abgeschalteten Basisstationen abgedeckten Gebiete dann von benachbarten Mobilfunkzellen und ihren Basisstationen mit abzudecken.

Das IEEE (Institute of Electrical and Electronics Engineers) hat einen Standard zum Energy Efficient Ethernet (EEE) verabschiedet [4], der auf eine Verringerung des Energieverbrauchs in Ethernet-basierten Komponenten abzielt. Ethernet-Komponenten werden häufig in Kundennetzen, wie z. B. Heimnetzen, verwendet.

Es existieren (Software-) Lösungen, die zeitbasiert, oder ereignisgesteuert, den Zustand von Geräten und damit deren Leistungs- und Energiebedarf in abgegrenzten Kundennetzen (vorwiegend Firmennetze) anpassen. Die zeitbasierte Steuerung erfolgt auf der Grundlage von festen hinterlegten Regeln; die ereignisgesteuerte Beeinflussung kann z. B. die über eine GPS-Ortung (Global Positioning System) festgestellte Position eines Mobiltelefons ausnutzen.

Allen diesen Verfahren zur Senkung des Energieverbrauchs gemeinsam ist, dass sie sich auf die Verringerung des Energieverbrauchs eines ganz speziellen und abgegrenzten Netzsegments orientieren; es sind keine übergreifende Steuerung und ein dafür notwendiger Informationsaustausch zwischen den Netzabschnitten vorgesehen.

Die Druckschrift "3rd Generation Partnership Project; Technical Specification Group Services and System Aspects; Telecommunication management; Energy Saving Management (ESM); Concepts and requirements (Release 10)" beschreibt das Management zur Energieeinsparung in Mobilfunknetzen.

Die Druckschrift EP 2 166 777 A1 beschreibt den Austausch von Energieinformationen von Komponenten in einem mobilen Netzwerk zur Bestimmung eines Pfades.

Die beschriebenen Ansätze zur Erhöhung der Energieeffizienz von Netzen durch Leistungsmanagement, oder allgemeiner lastadaptiven Netzbetrieb, sind auf einzelne Netzabschnitte beschränkt. Es fehlen übergreifende Konzepte, die den Energieverbrauch auf Grund von Informationen zu Nutzungsverhalten, oder Verkehrsbedarf minimieren können. Darüber hinaus sind die Leistungsmanagementmechanismen in den unterschiedlichen Netzsegmenten auf Grund der historischen Netz- und Technologieentwicklung im Allgemeinen voneinander prinzipiell verschieden und nicht ohne weiteres zueinander kompatibel.

Im Falle der erwähnten, bereits existierenden ereignisgesteuerten Verfahren unter Ausnutzung der Position des Mobiltelefons werden Geräte - z. B. der Arbeitsplatz-PC - ein- oder ausgeschaltet (oder in einen Standby-Modus) auf der Grundlage von Nähe-Informationen, also wie weit ist die gegenwärtige Position des Mobiltelefons von der bekannten und festen Positionen des betreffenden in seinem Zustand zu schaltenden Gerätes entfernt. Diese Zustands- und Positionsinformationen werden über einen IP-Tunnel (Internet Protocol) zu einem Server übertragen und dort zur Verwendung abgelegt.. Die an der Kommunikation beteiligten Netzelemente ("unterwegs") werden in ihrem Betriebszustand nicht mitgesteuert und es existiert zwischen verschiedenen Netzabschnitten keine übergreifende Steuerung; die Steuerung bezieht sich lediglich auf spezielle Geräte in abgeschlossenen Kundennetzen.

### Überblick über die Erfindung:

Gegenstand der vorliegenden Erfindung ist ein Verfahren, entsprechend des unabhängigen Anspruchs 1 das es gestattet, auf der Grundlage von Informationen, die durch die Position des Mobiltelefons gewonnen werden, assoziierte Verbindungen, Netzelemente und Netzabschnitte lastadaptiv in verschiedene Betriebszustände mit unterschiedlichen Leistungsbedarf zu schalten, mit dem Ziel der Verringerung des Leistungs- und Energieverbrauchs. Dabei ist der Aspekt der übergreifenden Steuerung von Fest- und Mobilfunknetz besonders zu betonen. Ebenso können alle an der entsprechenden Verbindung beteiligten Netzelemente - "unterwegs" - in Betriebs- und Leistungszuständen mitadaptiert werden.

Im Detail handelt es sich um ein Verfahren zur Steuerung von Bitraten- und Leistungszuständen von Komponenten eines Netzwerkes, wobei das Netzwerk ein Mobilfunknetz, ein Zugangsnetz und ein Aggregationsnetz umfasst, die miteinander verbunden sind. Bei den Leistungszuständen kann es sich um das Abschalten von Komponenten handeln, die zum Beispiel redundant ausgelegt sind, um eine Parallelverarbeitung zu ermöglichen. Alternativ können auch die Taktraten von internen Prozessoren herunter- geschaltet werden, wie digitale Signal-Prozessoren, weiterhin ist es möglich, dass die Taktrate aller Bauteile innerhalb der gesamten Netzwerkkomponente reduziert wird. Die Reduzierung der Bitrate wiederum kann erreicht werden durch die Nutzung von weniger aufwendigen Codierungsverfahren, oder das Reduzieren der Übertragungsfrequenz. Die entsprechende Reduzierung der Bitrate hat natürlich auch einen Einfluss auf den Energieverbrauch der entsprechenden Baugruppen innerhalb einer Netzwerkkomponente, die für die Codierung und Übermittlung der Daten in das Netzwerk zuständig sind. Weiterhin können die Leistungszustände verschiedene Betriebsmodi eines Netzelements (die diese Netzelemente dann natürlich unterstützen bzw. anbieten müssen) sein. Z. B. kann es sich beim DSL um die angesprochenen Modi L0, L2, L3 handeln bzw. bei anderen Netzelementen, die solche Modi evtl. noch nicht unterstützen, kann es sich auch erst um ggf. zukünftig implementierte Leistungszustände handeln.

### Das Verfahren umfasst die Schritte:

- kontinuierliche Erfassung der Positionsdaten eines Mobilfunk-Endgerätes und dessen Datenratenbedarf durch Komponenten des Mobilfunknetzes. Diese Aufgabe kann vorzugsweise durch die Basisstation erfolgen, an der das mobile Endgerät angeschlossen ist. Es ist jedoch möglich, dass das mobile Endgerät selber entsprechende Daten ermittelt und diese zum Beispiel als Broadcast-Nachricht in das Netzwerk übermittelt, indem, wie zum Beispiel im IP-Netzwerk üblich, entsprechende Broadcast-Adressen verwendet werden, die einen Adressbereich aufweisen, der lediglich von Komponenten in den Netzwerken berücksichtigt wird, die in unmittelbarer Nähe sind. Der Ansatz des Broadcast-Verfahrens kann natürlich auch von den Netzwerkkomponenten der Netzwerke durchgeführt werden, um die Informationen hinsichtlich der Position, der Identität und der Datenrate an benachbarte Komponenten im räumlichen Umfeld zu übermitteln. Alternativ ist es jedoch auch denkbar, dass die Komponenten den Datenstrom vom mobilen Endgerät zum Ziel beobachten und somit entlang dieses Datenpfads Informationen hinsichtlich der Position und des Datenratenbedarfes des mobilen Endgerätes an die Komponenten weiterleiten, die sich entlang des Pfades befinden. So kann eine Komponente die Informationen an die nächsten, benachbarten Komponenten weiterleiten, da sie anhand der Adressierung erkennt, dass die Daten des mobilen Endgerätes über die benachbarte Komponente geroutet werden. Diese Information kann über bestehende Protokolle im Netz verteilt werden, ggf. sind jedoch auch neue Signalisierungsprotokolle dafür notwendig oder Modifikationen von existierenden (SNMP), die z. B. auch DSLAMs und Aggregationsswitche ansprechen können.
- Das Weiterleiten der Positionsdaten und des Datenratenbedarfs an Komponenten im Aggregationsnetz und/oder Mobilfunknetz, die sich bezogen auf die Positionsdaten in örtlicher Nähe befinden und die somit für die Befriedigung des Datenratenbedarfs des Mobilfunk-Endgerätes zuständig sind, erfolgt somit durch Broadcast-Nachrichten, oder durch Knoten-zu-Knoten-Nachrichten, von einer Komponente zur nächsten. Anhand der Positiönsdaten kann jede Komponente, die ebenfalls ihre eigene Position kennt, entscheiden, ob die Informationen für sie relevant sind, oder nicht. Weiter kann ebenfalls anhand der Identität des mobilen Endgerätes erkannt werden, ob die Netzwerkkomponente im Komponentendatenpfad liegt und somit Daten überträgt, um entsprechend eine Relevanz zu erkennen. Sollte eine Relevanz erkannt werden, so ist es möglich den Energieverbrauch entsprechend zu planen und ebenfalls die Bitraten anzupassen. - Steuerung der Bitraten- und Leistungszustände der Komponenten im Aggregationsnetz und/oder Mobilfunknetz auf der Basis der übertragenen Positionsdaten und des Datenratenbedarfs. Anhand der ermittelten Daten, die die Identität und gegebenenfalls auch den Datenratenbedarf des mobilen Endgerätes erkennen lassen, kann der Leistungszustand und notfalls die Bitraten angepasst werden.

Das Netzwerk umfasst weiterhin ein Zugangsnetzwerk, das eine Verbindung eines Heimnetzwerkes mit dem Aggregationsnetzwerk herstellt, wobei Komponenten des Zugangsnetzwerk in Abhängigkeit der Positionsdaten und einer assoziierten Kennung des Mobilfunk-Gerätes, die an die Komponenten der Zugangsnetzwerke übertragen werden, eine Steuerung der Bitraten- und Leistungszustände der Komponenten im Zugangsnetzwerk vornehmen. So ist es möglich, dass das entsprechende Gateway des Zugangsnetzwerkes, das in der Regel DSL oder PON bereitstellt, in einer Datenbank eine Zuordnung der mobilen Nummer zum DSL-Anschluss speichert. Wenn sich zum Beispiel nun ein mobiles Endgerät dem Heimnetzwerk nähert, so kann die entsprechende DSL-Leitung in ihrer Leistung hochgefahren werden. Das Gateway erkennt anhand der übertragenen Identität des mobilen Endgerätes, die entweder aus dem Aggregationsnetz übermittelt wird, oder vom mobilen Endgerät selber, das zum Beispiel in regelmäßigen Abständen Nachrichten über Ort und

Bandbreitenbedarf sendet, oder in Abhängigkeit seiner Position Daten sendet, ob sich das mobile Endgerät zu einem Heimnetzwerk bewegt, oder sich von diesem wegbewegt. In Abhängigkeit des Bewegungspfades des mobilen Endgerätes kann eine Steuerung der Bitrate vorgenommen werden. Entsprechend können auch Komponenten im Heimnetzwerk gesteuert werden, die in der Regel über einen Router mit dem Verbindungsnetzwerk verbunden sind. So kann zum Beispiel der Leistungsbedarf anhand der Übertragungsmenge von Daten, anhand der Datenart, wie zum Beispiel des Protokolls auf den unterschiedlichen Protokollebenen, und der Regelmäßigkeit bzw. der Wiederholungsmuster bestimmt werden. Nutzt das mobile Endgerät zum Beispiel einen Dienst, bei dem regelmäßig Mails abgerufen werden, so besteht in der Regel ein geringer Datenratenbedarf, wenn zum Beispiel POP, oder das IMAP-Protokoll eingesetzt wird. Wenn hingegen Multimedia Daten zum Beispiel über das FTP-Protokoll übertragen werden, so ist der Bandbreitenbedarf hoch, entsprechendes gilt für Downloads von großen Dateien.

Bei Netzwerkkomponenten, über die größere Mengen von Daten geleitet werden, ist es wichtig, die Informationen der einzelnen Geräte zusammenzufassen, um daraus den Bedarf abzuleiten. So werden von einer Vielzahl von Mobilfunk-Endgeräten die Positionsdaten und der Datenratenbedarf bestimmt, so dass auf Basis dieser Daten statistisch signifikante Informationen durch die Netzkomponenten gewonnen werden, um bei zentralen Netzkomponenten basierend auf diesen Aktivitätsinformationen und daraus abgeleiteten Verkehrsvorhersagen Bitraten- und Leistungszustände zu steuern. Zentrale Netzkomponenten sind Komponenten, die vergleichsweise viele Verbindungen zu benachbarten Komponenten aufweisen. Sie sind gekennzeichnet durch einen hohen Datendurchsatz im Vergleich zu den Komponenten, die im Randbereich des Netzwerkes angeordnet sind.

Wie bereits oben ausgeführt wurde, kann die Bestimmung der Position durch die Basisstation als auch durch das mobile Endgerät selber erfolgen. Sollte das mobile Endgerät die Ortsposition selber bestimmen, bedarf es einer Übertragung dieser GPS Position in das Netzwerk hinein. Die GPS-Daten könnte mit einem modifizierten Signalisierungsprotokoll, wie z. B. SNMP, in das Netz übertragen werden. Ggf. genügt es, diese Daten über IP zu transportieren und dann in den entsprechenden Geräten diese IP-Pakete auszuwerten. Hierbei gibt es die Möglichkeit, dass regelmäßig die Position an eine oder mehrere zentrale oder räumlich naheliegende Netzwerkkomponenten weitergeleitet wird, die dann wiederum selbstständig für die Weiterverbreitung zuständig sind. Oder es gibt die Möglichkeit, dass das mobile Endgerät durch eine entsprechende Anwendung, die auf ihm installiert ist, in regelmäßigen Abständen den Leistungsbedarf, die Identität und eine Ortsposition in das Netz über entsprechende Botschaft Nachrichten überträgt. Eine entsprechende Aufteilung der Dienste ist ebenfalls denkbar.

Anhand der so in das Netzwerk übertragenen Informationen entscheidet jede Komponente des Netzwerks eigenständig anhand der gesammelten und aggregierten Daten, in welchem Leistungszustand es eintreten möchte, um Energie einzusparen.

Ein weiterer Bestandteil der Erfindung ist ein Netzwerk entsprechend des unabhängigen Anspruchs 6, bestehend aus Komponenten deren Bitraten- und Leistungszustände gesteuert werden, wobei das Netzwerk ein Mobilfunknetz und Aggregationanetz umfasst, die miteinander verbunden sind. Das Netzwerk ist eingerichtet und ausgebildet, um das oben beschriebene Verfahren zu implementieren. Das Netzwerk besteht in der Regel aus Router, Switch und Basisstationen, Gateways, Richtfunkstrecken, Kabelverbindung in Glasfaser, oder Kupfer etc., und anderen Komponenten, die über die entsprechenden optischen, oder Kupfer basierte Kabel miteinander verbunden sind.

Die einzelnen Komponenten weisen in der Regel digitalen Signalprozessor, spezifische Router-Chipsätze und Switch-Chipsätze, sowie CPUs auf, die durch Software gesteuert sein können, und deren Geschwindigkeit anpassbar ist. So können zusätzlich unterschiedliche Algorithmen ausgewählt werden, die einen unterschiedlichen Energiebedarf haben, da sie komplexer, oder weniger komplex sind. Die Prozessor und Baugruppen der Netzwerkkomponenten können in unterschiedlichen Betriebszuständen genutzt werden, die mehr oder weniger Energie verbrauchen. In der Regel hängt der Energieverbrauch mit der Übertragungsgeschwindigkeit zusammen und der dabei verwendeten Kodierung bzw. der Bitrate die verwendet wird.

### Figurenbeschreibung:

Im Folgenden folgt eine kurze Beschreibung der Figuren
Figur 1 zeigt illustrativ die Gliederung von Telekommunikationsnetzen in Abschnitte, die der vorliegenden Erfindung zu Grunde liegt.
Figur 2 zeigt die Zusammenschaltung einzelner Netzabschnitte anhand von beispielhaften Netzelementen, sowie das Signalisierungs- und Steuerprinzip der vorliegenden Erfindung.
Figur 3 zeigt die praktische Überlagerung und Zusammenschaltung von Elementen des Fest- und Mobilfunknetzes, sowie den Heimnetzen mit den Ausführungsbeispielen DSL-basiertes Kupfer-Zugangsnetz sowie PON-basiertem Glasfaser-Zugangsnetz als leitungsgebundene Zugangsnetz entsprechend der vorliegenden Erfindung.

### Überblick über die Ausführungsformen:

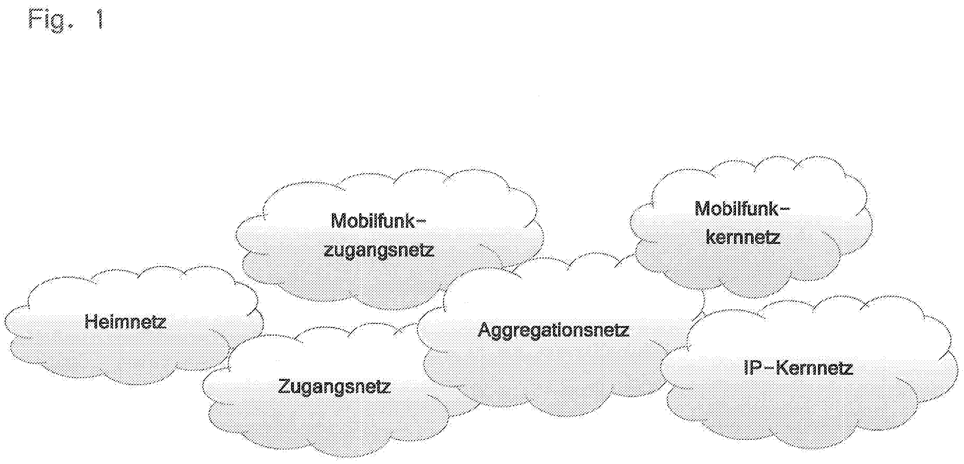

Figur 1 zeigt in schematischer Form die Gliederung von Telekommunikationsnetzen in Netzabschnitte. Diese Anordnung ist historisch mit der Entwicklung von derartigen Netzen gewachsen. Dementsprechend beziehen sich Mechanismen zur Steigerung der Energieeffizienz durch Anpassung von Betriebszuständen an beobachtete, oder vorhergesagte Verkehrslasten auf einzelne dieser Netzabschnitte: Beispielsweise werden DSL-Leistungsmanagenent und PON-Leistungsmanagement in Zugangsnetzen verortet. Diese Techniken sind, wie erwähnt, vorhanden, werden aber bisher in Netzen nicht eingesetzt.

Heimnetze, die eine Vielzahl von Geräten umfassen können - neben dem zentralen Element Home Gateway (HGW) z. B. Telefon, PC, Laptop, Drucker, Network Attached Storage (NAS), aber auch Elemente der Unterhaltungselektronik, wie z. B. Set-Top-Boxen und Fernseher - sind über das Zugangsnetz, das sich daran anschließende Aggregationsnetz mit dem IP-Kernnetz verbunden. Mobilfunkgeräte bauen ihre Verbindung zu den Basisstationen des Mobilfunk-Zugangsnetzes auf, die wiederum größtenteils über Glasfaserverbindungen an das Aggregationsnetz angebunden sind, von wo aus die MobilfunkKernnetzknoten erreicht werden. Auf diese Weise sind Fest- und Mobilfunknetze, die an sich getrennt aufgebaut und betrieben werden, miteinander verbunden. Mit dem Trend zu konvergenten Netzen wird erwartet, dass diese Grenzen zwischen Fest- und Mobilfunknetz noch weiter verschwimmen.

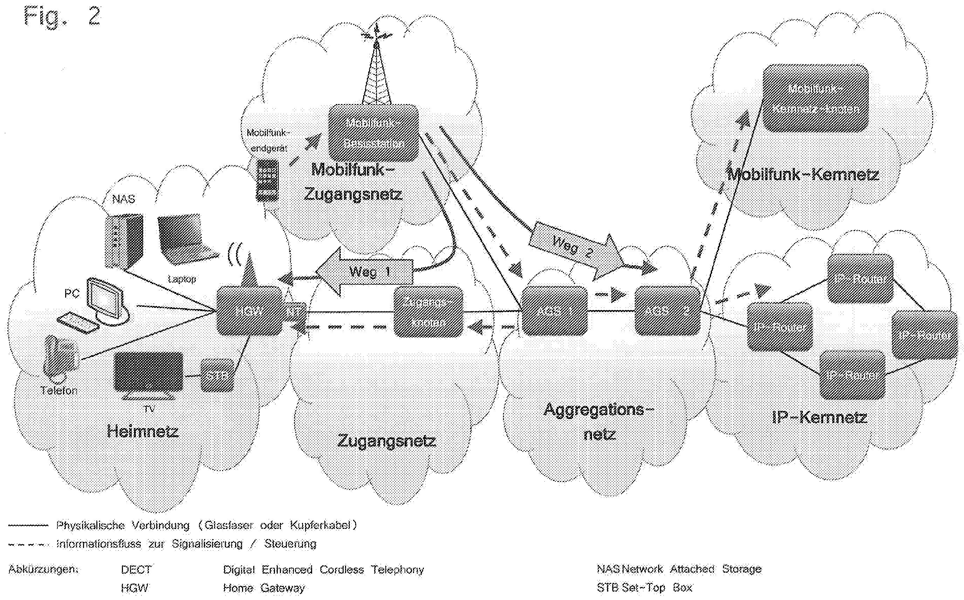

Figur 2 zeigt den schematischen Netzaufbau aus Figur 1 mit exemplarischen Netzelementen und Verbindungen, um das Wirkprinzip der vorliegenden Erfindung zu erläutern. Dieses Wirkprinzip wird für ein Mobiltelefon - wobei Mobiltelefon stellvertretend für jede Art von mobilem Endgerät steht - beschrieben; es ist sinngemäß erweiterbar für eine Vielzahl von Mobiltelefonen, so dass dann statistisch signifikante Informationen gewonnen werden können, um zentralere Netzkomponenten basierend auf diesen Aktivitätsinformationen und daraus abgeleiteten Verkehrsvorhersagen zu steuern. Grundlage für die Funktionsweise des Steuerungsverfahrens nach der vorliegenden Erfindung ist die Bestimmung der Position des Mobiltelefons: Diese Bestimmung kann grob auf Basis der Mobilfunkzelle geschehen, also die Bestimmung der Basisstation, mit der das Mobiltelefon verbunden ist, oder über die Positionsbestimmung mittels GPS in feinerer Auflösung. Außerdem wird das Mobiltelefon - und somit der Nutzer - mit einem Heimnetz (und dessen Geräten) assoziiert. Basierend auf den Positions- und Aktivitätsinformationen, die auf der Grundlage des Mobiltelefons gewonnen werden, können nun Netzelemente und Netzabschnitte in ihren Betriebszuständen und dem dazugehörigen Leistungsverbrauch gesteuert werden. Dabei können folgende Varianten unterschieden werden:
□Geschieht die Positionsbestimmung auf der Grundlage der Identifizierung der Basisstation und damit der Mobilfunkzelle, in der das Mobiltelefon sich befindet, kann die nachfolgend beschriebene Steuerung der Netzelemente des Mobilfunk- und Festnetzes erfolgen, die mit "Weg 2" gekennzeichnet ist, also Elemente des Aggregations- und IP-Kernnetzes sowie des Mobilfunkzugangs- und -Kernnetzes.
□Gelingt die Positionsbestimmung des Mobiltelefons so genau, dass eine vordefinierte Schwelle bezüglich der Nähe zum assoziierten Heimnetz unterschritten und somit erkannt wird, dass der Nutzer sich seinem eigenen Heimnetz nähert, können darüber hinaus die Netzelemente vom Aggregationsnetz hin zum Heimnetz des Nutzers mit in ihren Betriebszuständen und Leistungsverbrauch gesteuert werden: Dann kann über den "Weg 2" hinaus auch der "Weg 1" mit beeinflusst und lastadaptiv gesteuert werden.

Im Einzelnen ist die technische Funktionsweise des Verfahrens gemäß der vorliegenden Erfindung folgendermaßen zu beschreiben: Zunächst weiß die Basisstation in welcher Mobilfunkzelle sich das betreffende Mobiltelefon befindet. So kann zunächst, basierend auf dieser Information, und vergleichbaren Informationen weiterer Mobiltelefone und entsprechenden Vorhersagen der Betriebszustände und damit der Leistungsbedarf der Mobilfunkbasisstation selbst gesteuert werden. Die Nutzerinformation (Position und Verkehrsbedarf des Nutzers repräsentiert durch sein Mobiltelefon) wird dann weiter an den nächsten Netzknoten gegeben (signalisiert), dem ersten Aggregationsswitch (AGS 1). Das Aggregationsnetz - mit seinem heute typischerweise zweistufigen Aufbau - nimmt eine zentrale Rolle in der vorliegenden Erfindung ein, da hier sowohl Fest- als auch Mobilfunknetzelemente angebunden sind. Nun kann sukzessiv wieder der erste Aggregationsswitch selbst in seinem Betriebszustand gesteuert werden, basierend auf einer Auswertung der vom Mobiltelefon erhaltenen Information.

Die Information über Verkehrsbedarfe wird weitergegeben, und dann können weiter in Richtung der inneren Abschnitte des Netzes befindliche Netzelemente in ihren jeweiligen Betriebszuständen und damit verbundenen Leistungszuständen gesteuert werden, also der zweite Aggregationsswitch (AGS 2) und dann die Elemente des Mobilfunk-Kernnetzes und des IP-Kernnetzes (bestehend aus IP-Routern), wenn statistisch signifikante Beobachtungen (genügend große Anzahl von Nutzern), oder ggf. auch Vorhersagen über Aktivität und Verkehrsbedarf vorliegen. Diese vorstehend beschriebenen Steuermöglichkeiten betreffen den als "Weg 2" gekennzeichneten Signalisierungs- und Steuerweg. Es sei erwähnt, dass für diese Art der Steuerung die Signalisierungsinformationen zum Nutzerverhalten und Verkehrsbedarf in jedem Netzelement auszuwerten sind. Dies ist in heutigen Netzen nicht der Fall: Mobilfunkbasisstation und Mobilfunkkernnetzknoten sind über sogenannte Tunnel miteinander verbunden, d. h., sie benutzen zwar den in den Figuren gezeigten Weg über das Aggregationsnetz, aber die Aggregationsnetzknoten werten diesen Verkehr und die notwendigen Signalisierungsinformationen - wie sie der vorliegenden Erfindung zu Grunde liegen - nicht aus.

Kann die Position des Mobiltelefons so genau bestimmt werden (z. B. durch GPS-Ortung), dass erkannt werden kann, ob ein Nutzer sich seinem Heimnetz nähert - z. B. durch Auswertung einer Näheschwelle - kann zusätzlich zur Steuerung auf dem Weg 2 (wie vorstehend beschrieben) auch der Pfad zum Heimnetz des assoziierten Nutzers hin auf dem Weg 1 gesteuert werden: Es lässt sich feststellen, welche Festnetz-Zugangsnetzverbindung zu dem betreffenden Nutzer und seinem Heimnetz führt (z. B. im Ausführungsbeispiel DSL oder PON). Dann lässt sich unter Auswertung der Signalisierungsinformationen der Zugangsnetzknoten (z. B DSLAM (DSL Access Multiplexer) bei DSL-Anbindung oder OLT (Optical Line Termination) bei PON-Netzen) in seinen Betriebszuständen steuern, ebenso wie der zugehörige nutzerseitige Netzabschluss (NT, Network Termination). Gegebenenfalls können dann auch die Elemente des Heimnetzes über die von der Zugangsleitung (NT) erhaltenen Informationen - weiter über das HGW in das Zugangsnetz hinein verteilt - in einen Normalbetriebszustand versetzt werden, so dass sie dann bei Eintreffen des Nutzers betriebs- und nutzungsbereit sind.

In einem Beispielfall - wenn sich der Nutzer seinem Heimnetz nähert - kann dann schon rechtzeitig die Zugangsleitung von einem Schlafzustand in den Normalbetriebszustand geschaltet werden, so dass die Phase des Aufweckens der Leitung dann nicht mehr die Dienstgüte beeinflusst, da die Leitung schon den Normalbetriebszustand erreicht, wenn der Nutzer sein Heimnetz nutzen möchte. Dies wirkt sich insbesondere auch positiv in DSL-Netzen aus, die ansonsten bei Nutzung der definierten Leistungszustände (L2, L3, L0) [1,2] in Situationen geraten können, die die Leitung instabil werden lassen, oder zu Einschränkungen hinsichtlich der Dienstgüte führen können (längere, unakzeptable Verzögerungszeiten). Werden externe Informationen entsprechend der vorliegenden Erfindung genutzt, können Probleme mit der Dienstgüte und der Leitungsstabilität in DSL-Systemen umgangen werden.

Eine Besonderheit der vorliegenden Erfindung ist es, dass alle Netzelemente entlang der Übertragungstrecke bei Auswertung der entsprechenden Signalisierung durch die übergreifende Steuerung in ihren Betriebs- und damit Leistungszuständen angepasst werden, mit dem Ziel die Energieeffizienz im Netzbetrieb zu steigern. Im Gegensatz dazu arbeiten bisher bekannte Lösungen auf der Ebene einzelner Netzabschnitte.

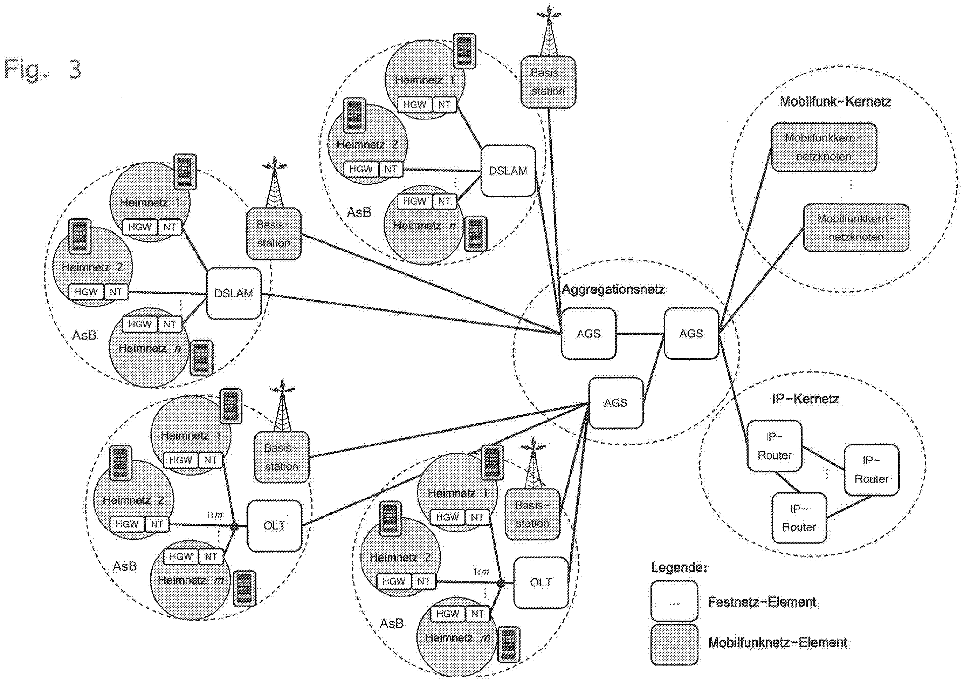

Figur 3 zeigt die Überlagerung von Fest- und Mobilfunkzugangsnetzen. Es wird deutlich, dass sowohl das leitungsgebundene Zugangsnetz, als auch das Mobilfunkzugangsnetz - naturgemäß - prinzipiell gleiche Flächen und Regionen abdecken. Die Anschlussbereiche (AsB) des leitungsgebundenen Zugangsnetzes sind dabei nicht identisch mit den Mobilfunkzellen: Die Struktur der Zugangsnetze hängt von Übertragungseigenschaften der verwendeten Übertragungsmedien ab und diese sind im Allgemeinen deutlich voneinander verschieden (im Beispiel beim Funkkanal verglichen mit Kupferkabeln, oder Glasfasern). Damit kann das vorstehend beschriebene technische Wirkprinzip greifen, das - in der Ausprägung mit Nutzung des Weges 1 zur Steuerung der Zugangsleitungen - auf der Auswertung von Näheinformationen zwischen Fest- und Mobilfunknetzelementen beruht (Heimnetz und assoziiertes Mobiltelefon). Darüber hinaus sind Ausführungsbeispiele für das leitungsgebundene Zugangsnetz angegeben: Zum einen werden DSL-basierte Zugangsnetze verwendet, zum anderen handelt es sich um optische Zugangsnetze in PON-Ausprägung mit passivem, optischem Koppler. Weitere leitungsgebundene Zugangsnetzvarianten - wie z. B. optische Punkt-zu-Punkt-Netze - sind hier denkbar; die vorliegende Erfindung lässt sich auch dann sinngemäß anwenden und das Steuerkonzept verwenden.

Das Aggregationsnetz nimmt - wie bereits erwähnt - eine zentrale Rolle bei der Steuerung ein, da hier die Informationen aus Fest- und Mobilfunknetz zusammenlaufen. Hier ist eine Auswertung und Verwertung der Signalisierungsinformationen erforderlich.

### Literatur und Quellen

[1] ITU-T Recommendation G.992.3: Asymmetrie Digital Subscriber Line Transceivers 2 (ADSL2). Genf, 2005
[2] ITU-T Recommendation G.992.5: *Asymmetric Digital Subscriber Line (ADSL) Transceivers* - *Extended Bandwidth ADSL2 (ADSL2+).* Genf, 2005
[3] ITU-T Series G. Supplement 45: *Means and impact of GPON power saving.* White Paper, Genf, 2009
[4] IEEE Std 802.3az™-2010 (Amendment to IEEE Std 802.3™-2008) : *IEEE Standard for Information technology-Telecommunications and Information exchange between systems-Local and metropolitan area networks-Specific requirements. Part 3: Carrier Sense Multiple Access with Collision Detection (CSMA*/*CD) Access Method and Physical Layer Specifications. Amendment 5*: *Media Access Control Parameters, Physical Layers, and Management Parameters for Energy-Efficient Ethernet. LAN*/*MAN Standards Committee of the IEEE Computer Society,* Approved 30 September 2010

## Patentansprüche

1. Verfahren zur Steuerung von Bitraten- und Leistungszuständen von Komponenten eines Netzwerkes, wobei das Netzwerk ein Mobilfunknetz, ein Zugangsnetzwerk, ein Heimnetzwerk und Aggregationsnetz umfasst, wobei das Mobilfunknetz mit dem Aggregationsnetzwerk und das Heimnetzwerk über das Zugangsnetzwerk mit dem Aggregationsnetzwerk miteinander verbunden sind, umfassend die Schritte:
- kontinuierliche Erfassung der Positionsdaten eines Mobilfunk-Endgerätes und dessen Datenratenbedarf durch Komponenten des Mobilfunknetzes;
- Weiterleiten der Positionsdaten und des Datenratenbedarfes aus dem Mobilfunknetz an Komponenten im Aggregationsnetz , die sich bezogen auf die Positionsdaten in örtlicher Nähe befinden und die somit für die Befriedigung des Datenratenbedarfs des Mobilfunk-Endgerätes zuständig sind;
- eigenständige Steuerung der Bitraten- und Leistungszustände der Komponenten im Aggregationsnetz auf der Basis der übertragenen Positionsdaten und des Datenratenbedarfs, wodurch der Leistungs- und Energieverbrauch gesenkt wird,
wobei Komponenten des Zugangsnetzwerkes in Abhängigkeit der Positionsdaten und einer assoziierten Kennung des Mobilfunk-Gerätes, die an die Komponenten des Zugangsnetzwerkes übertragen werden, eine Steuerung der Bitraten- und Leistungszustände der Komponenten im Zugangsnetzwerk vornehmen, wobei wenn erkannt wird, dass sich ein Mobilfunk-Endgerät, das einem Heimnetzwerk zugeordnet ist, sich diesem nähert, so wird im Zugangsnetzwerk und/oder Heimatnetzwerk die Bitrate der Komponenten erhöht und falls sich das
Mobilfunk-Endgerät entfernt so kann die Bitrate herabgesetzt werden.

2. Das Verfahren nach dem vorhergehenden Anspruch, wobei das Heimnetzwerk in Abhängigkeit der Positionsdaten und der Kennung des Mobilfunk-Gerätes eine Steuerung der Bitraten- und Leistungszuständen der Komponenten im Heimnetzwerk vornimmt.

3. Das Verfahren nach einem oder mehreren der vorhergehenden Ansprüche, wobei von einer Vielzahl von Mobilfunk-Endgeräten die Positionsdaten und der Datenratenbedarf bestimmt wird, so dass auf Basis dieser Daten statistisch signifikante Informationen durch die Netzkomponenten gewonnen werden, um bei zentralen Netzkomponenten basierend auf diesen Aktivitätsinformationen und daraus abgeleiteten Verkehrsvorhersagen Bitraten- und Leistungszustände zu steuern.

4. Das Verfahren nach einem oder mehreren der vorhergehenden Ansprüche, wobei die Bestimmung der Positionsdaten auf Basis der Mobilfunkzelle, oder über die Positionsbestimmung mittels GPS erfolgt.

5. Das Verfahren nach einem oder mehreren der vorhergehenden Ansprüche, wobei Positionsdaten und Datenratenbedarf von den Komponenten in den Netzwerken untereinander weitergeleitet werden, wenn über sie der Datenverkehr des Mobilfunk-Endgeräts läuft und/oder wenn sie in räumlicher Nähe sind, wobei jede Komponente im Netzwerk selber die Bitraten- und Leistungszustände steuert.

6. Netzwerk bestehend aus Komponenten deren Bitraten- und Leistungszuständen gesteuert werden, wobei das Netzwerk ein Mobilfunknetz, ein Zugangsnetzwerk, ein Heimnetzwerk und Aggregationsnetz umfasst, wobei das Mobilfunknetz mit dem Aggregationsnetzwerk und das Heimnetzwerk über das Zugangsnetzwerk mit dem Aggregationsnetzwerk miteinander verbunden sind;
wobei die Komponenten im Mobilfunknetz so ausgebildet und eingerichtet sind, dass eine kontinuierliche Erfassung der Positionsdaten eines Mobilfunk-Endgerätes und dessen Datenratenbedarfs erfassbar ist;
und wobei die Komponenten weiterhin so ausgebildet und eingerichtet sind, dass ein Weiterleiten der Positionsdaten und des Datenratenbedarfs aus dem Mobilfunknetz an Komponenten im Aggregationsnetz erfolgt, die sich bezogen auf die Positionsdaten, in örtlicher Nähe befinden und die somit für die Befriedigung des Datenratenbedarfs des Mobilfunk-Endgerätes zuständig sind;
und wobei die Komponenten so ausgebildet und eingerichtet sind, dass eine eigenständige Steuerung der Bitraten- und Leistungszustände im Aggregationsnetz und/oder Mobilfunknetz auf der Basis der übertragenen Positionsdaten und des Datenratenbedarfs zur Verbesserung des Leistungs- und Energieverbrauchs erfolgt, wobei Komponenten des Zugangsnetzwerk so eingerichtet und ausgebildet sind, dass in Abhängigkeit der Positionsdaten und einer Kennung des Mobilfunk-Gerätes, die an die Komponenten der Zugangsnetzwerke übertragen werden, eine Steuerung der Bitraten- und Leistungszuständen der Komponenten im Zugangsnetzwerk vornehmbar ist; wobei die Komponenten so eingerichtet sind, dass wenn erkannt wird, dass sich ein Mobilfunk-Endgeräten, das mit einem Heimnetzwerk zugeordnet ist, sich diesem nähert, so wird im Zugangsnetzwerk und/oder Heimatnetzwerk die Bitrate der Komponenten erhöht und falls sich das Mobilfunk-Endgerät entfernt so wird die Bitrate herabgesetzt.

7. Das Netzwerk nach dem vorhergehenden Anspruch, wobei das Heimnetzwerk in Abhängigkeit der Positionsdaten und der Kennung des Mobilfunk-Gerätes eine Steuerung der Bitraten- und Leistungszuständen der Komponenten im Heimnetzwerk vornimmt.

8. Das Netzwerk nach einem oder mehreren der vorhergehenden Netzwerk-Ansprüche, wobei die Komponenten so ausgebildet und eingerichtet sind, dass von einer Vielzahl von Mobilfunk-Endgeräten die Positionsdaten und der Datenratenbedarf bestimmbar ist, so dass auf Basis dieser Daten statistisch signifikante Informationen gewinnbar sind, um bei zentralen Netzkomponenten basierend auf diesen Aktivitätsinformationen und daraus abgeleiteten Verkehrsvorhersagen Bitraten- und Leistungszustände zu steuern.

9. Das Netzwerk nach einem oder mehreren der vorhergehenden Netzwerk -Ansprüche, wobei die Bestimmung der Positionsdaten auf Basis der Mobilfunkzelle, oder über die Positionsbestimmung mittels GPS durchführbar ist.

10. Das Netzwerk nach einem oder mehreren der vorhergehenden Netzwerk-Ansprüche, wobei die Komponenten so eingerichtet und ausgebildet sind, dass Positionsdaten und Datenratenbedarf der Mobilfunk-Endgeräte zu anderen Komponenten weiterleitbar sind, wenn über die Komponenten der Datenverkehr des Mobilfunk-Endgeräts läuft und/oder wenn die Komponenten in räumlicher Nähe sind, wobei jede Komponente im Netzwerk selber die Bitraten- und Leistungszustände steuert.

## Claims

1. A method for controlling bit rate and power states of components of a network, the network comprising a mobile radio network, an access network, a home network and aggregation network, wherein the mobile radio network is connected to the aggregation network and the home network is connected to the aggregation network via the access network, comprising the steps of:
- continuously acquiring the position data of a mobile radio terminal and its data rate demand by components of the mobile radio network;
- forwarding the position data and the data rate demand from the mobile radio network to components in the aggregation network which are in local proximity with respect to the position data and which are thus responsible for satisfying the data rate demand of the mobile radio terminal;
- Independent control of the bit rate and power states of the components in the aggregation network on the basis of the transmitted position data and the data rate requirement, thereby reducing power and energy consumption,
wherein components of the access network perform a control of the bit rate and power states of the components in the access network as a function of the position data and an associated identifier of the mobile radio terminal which are transmitted to the components of the access network, wherein if it is detected that a mobile radio terminal which is assigned to a home network is approaching the latter, the bit rate of the components is increased in the access network and/or home network and if the mobile radio terminal is removed, the bit rate can be reduced.

2. The method according to the preceding claim, wherein the home network controls the bit rate and power states of the components in the home network in dependence on the position data and the identifier of the mobile radio terminal.

3. The method according to one or more of the preceding claims, wherein the position data and the data rate requirement are determined from a plurality of mobile radio terminals, such that statistically significant information is obtained by the network components on the basis of said data, in order to control bit rate and power states of central network components based on said activity information and traffic forecasts derived therefrom.

4. The method according to one or more of the preceding claims, where the position data is determined on the basis of the mobile phone cell or by determining the position by means of GPS.

5. The method according to one or more of the preceding claims, wherein position data and data rate requirements of the components in the networks are passed on to each other when the data traffic of the mobile radio terminal passes through them and/or when they are in spatial proximity, wherein each component in the network itself controls the bit rate and power states.

6. A network consisting of components whose bit rate and power states are controlled, the network comprising a mobile radio network, an access network, a home network and aggregation network, wherein the mobile radio network is connected to the aggregation network and the home network is connected to the aggregation network via the access network; wherein the components in the mobile radio network are configured and arranged such that continuous detection of the position data of a mobile radio terminal and its data rate requirement can be detected; and wherein the components are further designed and arranged such that the position data and the data rate requirement from the mobile radio network are forwarded to components in the aggregation network which are located in local proximity with respect to the position data and which are thus responsible for satisfying the data rate requirement of the mobile radio terminal; and the components being designed and set up in such a way that independent control of the bit rate and power states in the aggregation network and/or mobile radio network takes place on the basis of the transmitted position data and the data rate requirement in order to improve the power and energy consumption, components of the access network being designed and set up in such a way that it is possible to control the bit rate and power states of the components in the access network as a function of the position data and an identifier of the mobile radio terminal which are transmitted to the components of the access networks; wherein the components are arranged such that if it is detected that a mobile radio terminal associated with a home network is approaching it, the bit rate of the components in the access network and/or home network is increased and if the mobile radio terminal is removed, the bit rate is reduced.

7. The network according to the preceding claim, wherein the home network controls the bit rate and power states of the components in the home network in dependence on the position data and the identifier of the mobile radio terminal.

8. The network according to one or more of the preceding network claims, the components being designed and arranged such that the position data and the data rate requirement can be determined from a plurality of mobile radio terminals so that statistically significant information can be obtained on the basis of this data to control bit rate and power states of central network components based on this activity information and traffic forecasts derived therefrom.

9. The network according to one or more of the previous network claims, wherein the determination of the position data is feasible on the basis of the mobile radio cell, or via position determination by means of GPS.

10. The network according to one or more of the preceding network claims, wherein the components are arranged and designed such that position data and data rate requirements of the mobile radio terminals can be forwarded to other components if the data traffic of the mobile radio terminal runs via the components and/or if the components are in spatial proximity, wherein each component in the network itself controls the bit rate and power states.

## Revendications

1. Un procédé de contrôle du débit binaire et des états de puissance de composants d'un réseau, le réseau comprenant un réseau de radiotéléphonie mobile, un réseau d'accès, un réseau domestique et un réseau d'agrégation, dans lequel le réseau de radiotéléphonie mobile est connecté au réseau d'agrégation et le réseau domestique est connecté au réseau d'agrégation via le réseau d'accès, comprenant les étapes consistant à:
- acquérir en continu les données de position d'un terminal de radiocommunication mobile et ses besoins en débit de données au moyen des composants du réseau de radiocommunication mobile;
- transmettre les données de position et des besoins de débit de données depuis le réseau de radiotéléphonie mobile vers les composants dans le réseau d'agrégation qui sont en proximité locale par rapport aux données de position et sont ainsi responsable pour satisfaire les besoin de débit de données du terminal de radiocommunication mobile ;
- contrôler indépendamment le débit et les états de puissance des composants du réseau d'agrégation sur la base des données de position transmise des du besoin de débit de données, réduisant ainsi la puissance et la consommation électrique,
dans lequel les composants du réseau d'accès effectuent une commande du débit de données et des états de puissance des composants dans le réseau d'accès en tant qu'une fonction des données de position et un identifiant associé du terminal de radiocommunication mobile qui sont transmises aux composants du réseau d'accès, dans lequel s'il est détecté qu'un terminal de radiocommunication mobile qui est affecté à un réseau domestique approche de ce dernier, le débit binaire des composants est augmenté au sein du réseau d'accès et/ou du réseau domestique et si le terminal de radiocommunication mobile est enlevé, le débit binaire peut être réduit.

2. Le procédé selon la revendication précédente, dans lequel le réseau domestique, commande de débit de données et les états de puissance des composants au sein du réseau domestique en fonction des données de position et de l'identificateur du terminal de radiocommunication mobile.

3. Le procédé selon une ou plusieurs des revendications précédentes, dans lequel les données de position et les besoin de débit de données sont déterminés par une multiplicité de terminaux de radiocommunication mobiles, de sorte que des informations statistiquement significatives sont obtenues par les composants du réseau sur la base desdites données, afin de pouvoir commander le débit binaire et les états de puissance des composants du réseau central sur la base de ladite information et des prévisions de trafic dérivées de celles-ci.

4. Le procédé selon une ou plusieurs des revendications précédentes, dans lequel les données de position sont déterminées sur la base de la cellule de téléphonie mobile ou sur la détermination de la position au moyen d'un GPS.

5. Le procédé selon l'une ou plusieurs des revendications précédentes, dans lequel les données de position et les besoins de débit de données des composants des réseaux sont passés les uns aux autres lorsque le trafic de données du terminal de radiocommunication mobile passe par eux, et/ou lorsque qu'il sont en proximité spatiale, dans lequel chaque composant dans le réseau commande lui-même le débit de données et les états de puissance.

6. Un réseau constitué de composants dont le débit binaire et les états de puissance sont commandés, le réseau comprenant un réseau de radiocommunication mobile, un réseau d'accès, un réseau domestique et un réseau d'agrégation, dans lequel le réseau de radiocommunication mobile est connecté au réseau d'agrégation et le réseau domestique est connecté au réseau d'agrégation via le réseau d'accès ; dans lequel les composant dans le réseau de radiocommunication mobile sont configurés et disposés de telle sorte qu'une détection continue des données de position d'un terminal de radiocommunication mobile et de ses besoins de débits de données peuvent être détectés ; et dans lequel les composants sont en outre conçus et disposés de telle sorte que les données de position et les besoins en débits de données sont transmis depuis le réseau de radiocommunication mobile vers les composants dans le réseau d'agrégation qui sont localisé à proximité locale par rapport aux données de position et qui sont ainsi responsable pour répondre aux besoins de débits de données du terminal de radiocommunication mobile ; et les composants sont conçus et configurés de telle sorte qu'une commande indépendante du débit binaire et des états de puissance au sein du réseau d'agrégation et/ou du réseau de radiocommunication mobile est effectuée sur la base des données de position et des besoins en débit de données transmis afin d'améliorer la consommation d'énergie électrique, les composants du réseau d'accès conçus et configurés de telle sorte qu'il est possible de commander le débit binaire et les états de puissance des composants dans le réseau d'accès en tant que fonction des données de position et un identifiant du terminal de radiocommunication mobile qui sont transmis aux composants des réseaux d'accès ; dans lequel les composants sont disposés de telle sorte que s'il est détecté qu'un terminal de radiocommunication mobile qui est affecté à un réseau domestique approche de ce dernier, le débit binaire des composants dans le réseau d'accès et/ou le réseau domestique sont augmentés et si le terminal de radiocommunication mobile est enlevé, le débit binaire est réduit.

7. Le réseau selon la revendication précédente, dans lequel le réseau domestique commande le débit binaire et les états de puissance des composants du réseau domestique en fonction des données de position et de l'identifiant du terminal de radiocommunication mobile.

8. Le réseau selon une ou plusieurs des revendications de réseau précédentes, dans lequel les composants sont conçus et configurés de telle sorte que les données de position et le besoin de débit de données puissent être déterminés par une pluralité de terminaux de radiocommunication mobiles, de sorte que des informations statistiquement significatives puissent être obtenues à partir de ces données pour commander le débit binaire et les états de puissance des composants de réseau centraux sur la base de cette information d'activité et des prévisions de trafic dérivées.

9. Le réseau selon une ou plusieurs des revendications de réseau précédentes, dans lequel la détermination des données de position est possible sur la base de la cellule de radiotéléphonie mobile, ou via la détermination de la position par GPS.

10. Le réseau selon une ou plusieurs des revendications de réseau précédentes, dans lequel les composants sont configurés et configurés de telle sorte que les données de position et les besoins en débit de données des terminaux de radiocommunication mobiles peuvent être transmis aux autres composants si le trafic de données du terminal de radiocommunication mobile va via les composants et/ou si les composants sont dans une proximité spatiale, dans lequel chaque composant au sein du réseau lui-même commande le débit binaire et les états de puissance.
